# EUROPÄISCHE PATENTSCHRIFT

(11) **EP 1 634 674 B1**
(45) Veröffentlichungstag und Bekanntmachung des Hinweises auf die Patenterteilung: **19.03.2008**
(21) Anmeldenummer: 04021785.3
(22) Anmeldetag: 14.09.2004
(51) Int. Cl.: B23K 26/42, F16P 3/02, B23K 37/00

(54) **Schutzvorrichtung einer Laserbearbeitungseinheit**
Protection device for a laser machining unit
Dispositif de protection pour une unité de travail au laser

(43) Veröffentlichungstag der Anmeldung: 15.03.2006
(73) Patentinhaber: TRUMPF Werkzeugmaschinen GmbH + Co. KG, 71254 Ditzingen (DE)
(72) Erfinder: Brauchle, Thomas, 71229 Leonberg (DE); Wirnitzer, Markus, 71263 Weil der Stadt (DE); Fischer, Gunter, 71297 Mönsheim (DE); Staiger, Wolfgang, 71229 Leonberg/Höfingen (DE)
(74) Vertreter: Bäcker, Rüdiger

(56) Entgegenhaltungen:
- DE-U- 9 319 380
- US-A1- 2003 127 440

## Beschreibung

Die Erfindung betrifft eine Laserbearbeitungsschutzvorrichtung.

Bei Laserbearbeitungseinheiten werden bisher starre, verschiebbare Türen als Schutzvorrichtung und/oder zur Unterteilung von autarken Arbeitsbereichen eingesetzt. Die Türen sind verschiebbar angeordnet, damit ein Ausleger und/oder ein Laserbearbeitungskopf den Arbeitsbereich wechseln kann. In dem einen Arbeitsbereich finden vorbereitende Maßnahmen und in dem anderen Arbeitsbereich finden gleichzeitig Laserbearbeitungen statt.

Durch die DE 9319380 U1 ist ein Brecher für Gestein und/oder Recyclingmaterial mit einer Rollladen-Einhausung bekannt geworden.

Es soll die Aufgabe gelöst werden, eine möglichst einfach aufgebaute Laserbearbeitungsschutzvorrichtung zu entwickeln, welche es gestattet, dass ein Ausleger und/oder ein Laserbearbeitungskopf den Arbeitsbereich wechseln kann.

Diese Aufgabe wird durch eine Laserbearbeitungsschutzvorrichtung gemäß Patentanspruch 1 gelöst. Es ist ein Grundgestell mit einer U-förmigen Führung der Trennwand vorgesehen, wobei die Trennwand das Grundgestell quer zur Längsrichtung des Grundgestells durchlaufen und an den beiden Längsseiten des Grundgestells aus dem Grundgestell heraus gefahren werden kann. Wenn jeweils eine Hälfte der Trennwand in einer mittleren Stellung der Trennwand beidseitig aus dem Grundgestell heraus fahrbar ist, kann der Ausleger und/oder der Laserbearbeitungskopf die Trennwand überqueren.

Eine Ausführung des Grundgestells mit Rollen erlaubt das Verfahren und Positionieren der Trennwand in der Laserbearbeitungseinheit.

Zur Bewegung der Trennwand ist eine Antriebseinheit vorteilhaft.

Ein Ausführungsbeispiel der Erfindung ist in der Zeichnung schematisch dargestellt und wird nachfolgend mit Bezug zu den Figuren der Zeichnung näher erläutert. Es zeigt im Einzelnen:
- **Fig. 1**: eine Draufsicht einer Laserbearbeitungseinheit;
- **Fig. 2a bis 2c**: eine Seitenansicht der Schutzvorrichtung der Laserbearbeitungseinheit;
- **Fig. 3**: einen vergrößerten Ausschnitt einer Trennwand der Schutzvorrichtung.

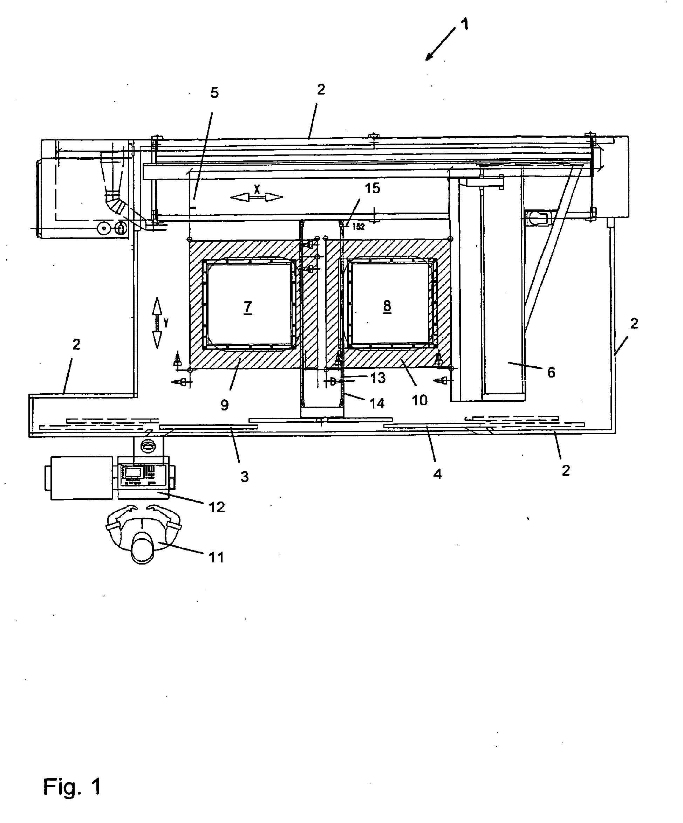

Aus der **Fig. 1** ist der Aufbau einer Laserbearbeitungseinheit **1** für einen 2-Stationenbetrieb ersichtlich, welche äußere Wä fünf nde 2 und Schiebetüren **3** und **4** aufweist und zum Laserbearbeiten, wie Laserschneiden, Laserschweißen, Härten etc., geeignet ist. Ein Maschinenrahmen **5** trägt einen Ausleger **6,** an dem ein in der Figur 1 nicht gezeigter Laserbearbeitungskopf angebracht ist. Mithilfe des Auslegers **6** kann der Laserbearbeitungskopf in X-, Y-, Z-Richtung über einem ersten und einem zweiten Arbeitstisch **7** und **8** positioniert werden. Schraffiert eingezeichnet sind die für die Bewegung des Laserbearbeitungskopfs zur Verfügung stehenden autarken Arbeitsbereiche **9** und **10,** welche sich aus dem benötigten Platzbedarf des Auslegers 6 und des Laserbearbeitungskopfs ergeben.

Beim Betrieb der Laserbearbeitungseinheit 1 kann ein Anwender **11** an einem Arbeitstisch 7 oder 8 vorbereitende Maßnahmen durchführen, den Arbeitsplatz durch die Schiebetür 3 oder 4 wieder verlassen und die Laserbearbeitung bei geschlossener Schiebetür 3 oder 4 von außen über eine Bedieneinrichtung **12** geschützt starten und durchführen. Es kann aber auch eine Automatisierung der Laserbearbeitungseinheit 1 verwirklicht sein.

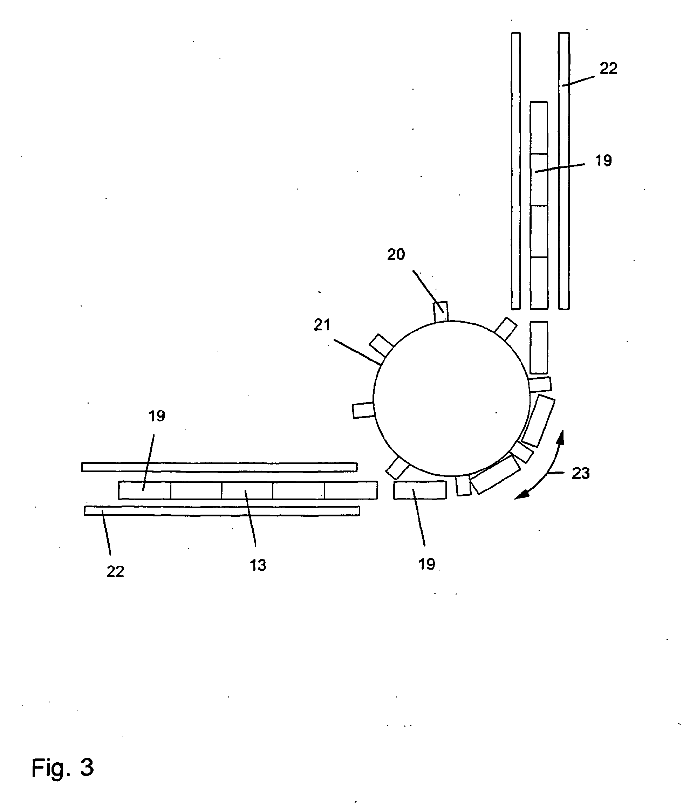

Wenn ein Werkstück auf einem Arbeitstisch 7 oder 8 bearbeitet werden soll, muss der Laserbearbeitungskopf einerseits aus einem Arbeitsbereich 9 oder 10 in den anderen wechseln. Andererseits können Vorbereitungen in einem Arbeitsbereich 9 oder 10 von dem Anwender 11 nur durchgeführt werden, wenn der Arbeitsbereich 9 oder 10 gegen eine Laserstrahlung geschützt ist. Hierzu ist eine Schutzvorrichtung vorgesehen, welche eine bewegbare Trennwand **13** aus einzelnen Sektionen (siehe Fig. 3) in der Art eines umlaufenden Rollladens aufweist. Die Trennwand 13 ist an ihren Enden **14** und **15** in Führungsschienen geführt. Somit kann in dem einen Arbeitsbereich eine Laserbearbeitung stattfinden, während in dem anderen Arbeitsbereich gerüstet werden kann.

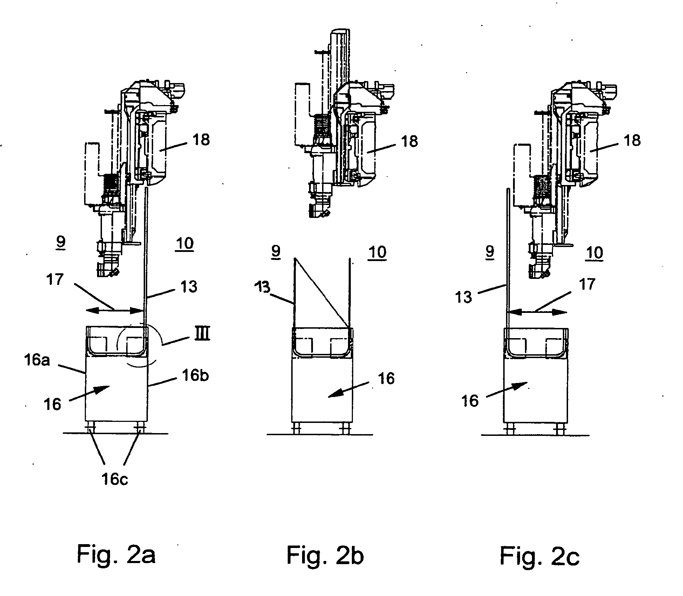

Die Abfolge der Figuren 2a bis 2c zeigt die Bewegungsmöglichkeiten der Trennwand 13:

In einer ersten Stellung gemäß **Fig. 2a** ist die Trennwand 13 vollständig auf der dem Arbeitsbereich 10 zugewandten Seite ausgefahren. Der Arbeitsbereich 10 ist abgeschirmt, der Anwender könnte dort arbeiten. Auf der dem Arbeitsbereich 9 zugewandten Seite ist die Trennwand 13 in einem Grundgestell **16** mit Grundgestellwänden **16a** und **16b** versenkt, so dass ein Arbeitsteilbereich **17** zur Bewegung des Auslegers oder des Laserbearbeitungskopfs **18** zur Verfügung steht.

In einer zweiten Stellung gemäß **Fig. 2b** ist die Trennwand 13 sowohl auf der dem Arbeitsbereich 9 als auch auf der dem Arbeitsbereich 10 zugewandten Seite teilweise, d. h. zur Hälfte, ausgefahren. Dies erlaubt eine Überquerung der Trennwand 13 durch den Laserbearbeitungskopf 18. Die Trennwand 13 schaut beidseitig aus dem Grundgestell 16 heraus.

In einer dritten Stellung gemäß **Fig. 2c** ist die Trennwand 13 vollständig auf der dem Arbeitsbereich 9 zugewandten Seite ausgefahren. Der Arbeitsbereich 9 ist abgeschirmt, der Anwender könnte dort arbeiten. Auf der dem Arbeitsbereich 10 zugewandten Seite ist die Trennwand 13 in dem Grundgestell 16 der Trennwand 13 versenkt, so dass der Arbeitsteilbereich 17 zur Bewegung des Auslegers oder des Laserbearbeitungskopfs 18 zur Verfügung steht. Der Arbeitsteilbereich 17 wird wechselweise dem einen oder dem anderen Arbeitsbereich 9 oder 10 hinzu gerechnet und zur Verfügung gestellt.

Das Grundgestell 16 ist mit Rollen **16c** versehen und kann in den Arbeitsbereich der Laserbearbeitungseinheit geschoben werden und diesen in zwei autarke Arbeitsbereiche unterteilen. Bei Bedarf kann das Grundgestell 16 mit der Trennwand 13 auch entfernt werden, um eine Nutzung des gesamten Arbeitsbereichs zur Laserbearbeitung größerer Werkstücke zu ermöglichen.

Wie in **Fig. 3** dargestellt, besteht die Trennwand 13 aus einzelnen Sektionen **19,** welche gelenkig miteinander verbunden sind, wobei Verbindungsstücke der Sektionen 19 nicht gezeigt und so ausgebildet sind, dass die Sektionen 19 zusammenschiebbar sind. Dieses Prinzip an sich ist durch Rollläden oder Rolltore bekannt. In Zwischenräume der Sektionen 19 können Zähne **20** eines Antriebsrades **21** einer in dem Grundgestell aufgenommenen Antriebseinheit mit einem Getriebemotor oder Elektromotor eingreifen und die Trennwand 13 in der Führungsschiene **22** gemäß dem Doppelpfeil **23** bewegen und daher hoch oder runter fahren.

### BEZUGSZEICHENLISTE

- 1: Laserbearbeitungseinheit
- 2: Wand
- 3: Schiebetür
- 4: Schiebetür
- 5: Maschinenrahmen
- 6: Ausleger
- 7: Arbeitstisch
- 8: Arbeitstisch
- 9: Arbeitsbereich
- 10: Arbeitsbereich
- 11: Anwender
- 12: Bedieneinrichtung
- 13: Trennwand
- 14: Trennwandende
- 15: Trennwandende
- 16: Grundgestell
- 16a: Grundgestellwand
- 16b: Grundgestellwand
- 17: Arbeitsteilbereich
- 18: Laserbearbeitungskopf
- 16c: Rolle
- 19: Sektion
- 20: Zahn
- 21: Antriebsrad
- 22: Führungsschiene
- 23: Bewegungsrichtung

## Patentansprüche

1. Laserbearbeitungsschutzvorrichtung mit einer in vertikaler Richtung bewegbaren Trennwand (13) aus einzelnen miteinander verbundenen Sektionen (19), **dadurch gekennzeichnet, daß** ein Grundgestell (16) mit einer U-förmigen Führung der Trennwand (13) vorgesehen ist, wobei die Trennwand (13) das Grundgestell (16) quer zur Längsrichtung des Grundgestells (16) durchlaufen und an den beiden Längsseiten des Grundgestells (16) aus dem Grundgestell (16) heraus gefahren werden kann.

2. Schutzvorrichtung nach Anspruch 1, **dadurch gekennzeichnet, dass** jeweils eine Hälfte der Trennwand (13) in einer mittleren Stellung der Trennwand (13) beidseitig aus dem Grundgestell (16) heraus fahrbar ist.

3. Schutzvorrichtung nach Anspruch 1 oder 2, **dadurch gekennzeichnet, dass** das Grundgestell (16) mit Rollen (16c) versehen ist.

4. Schutzvorrichtung nach einem der vorhergehenden Ansprüche, **dadurch gekennzeichnet, dass** das Grundgestell (16) eine Antriebseinheit zur Bewegung der Trennwand (13) aufnimmt.

## Claims

1. A laser processing protection device comprising:
a dividing wall (13) that can be moved in a vertical direction and consists of individual interconnected sections (19), **characterized in that** a basic frame (16) is provided, which has a U-shaped guide for the dividing wall (13),
wherein the dividing wall (13) can traverse the basic frame (16) in a transverse direction with respect to the longitudinal direction of the basic frame (16) and can be moved out of the basic frame (16) on both longitudinal sides of the basic frame (16).

2. Protection device according to claim 1, **characterized in that**, in a central position of the dividing wall (13), at least half of the dividing wall (13) is movable out of the basic frame (16) on each side.

3. Protection device according to claim 1 or 2, **characterized in that** the basic frame (16) includes rollers (16c).

4. Protection device according to any one of the preceding claims, **characterized in that** the basic frame (16) includes a drive unit to move the dividing wall (13).

## Revendications

1. Dispositif de protection pour une unité d'usinage au laser, avec une paroi de séparation (13) déplaçable en direction verticale, composée de plusieurs sections (19) reliées les unes aux autres, **caractérisé en ce qu'**il est prévu un bâti de base (16) avec un guidage en forme de U de la paroi de séparation (13), la paroi de séparation (13) pouvant passer à travers le bâti de base (16) transversalement à la direction longitudinale du bâti de base (16) et être sortie du bâti de base (16) le long des deux grands côtés du bâti de base (16).

2. Dispositif de protection selon la revendication 1, **caractérisé en ce que** dans une position intermédiaire de la paroi de séparation (13), une moitié de la paroi de séparation (13) peut être sortie de chaque côté du bâti de base (16).

3. Dispositif de protection selon la revendication 1 ou 2, **caractérisé en ce que** le bâti de base (16) est pourvu de galets (16c).

4. Dispositif de protection selon l'une des revendications précédentes, **caractérisé en ce que** le bâti de base (16) reçoit une unité d'entraînement pour déplacer la paroi de séparation (13).
